Europäisches Patentamt

European Patent Office

Office européen des brevets

(11) Publication number: **0 053 588**
A1

## (12) EUROPEAN PATENT APPLICATION

(21) Application number: **81830234.1**

(22) Date of filing: **23.11.81**

(51) Int. Cl.³: **B 65 H 71/00, D 06 B 23/04**

(30) Priority: **03.12.80 IT 8347480**

(43) Date of publication of application: **09.06.82**
Bulletin 82/23

(84) Designated Contracting States: **AT BE CH DE FR GB LI LU NL SE**

(71) Applicant: **OFFICINE SAVIO S.p.A., Via Udine 105, I-33170 Pordenone (IT)**

(72) Inventor: **Minto, Luigi, Piazza XXVIII Ottobre, 14, I-31025 S.Lucia Di Piave (TV) (IT)**

(74) Representative: **Petraz, Gilberto, G.L.P. S.a.s. di Gilberto Petraz P.le Cavedalis 6/2, I-33100 Udine (IT)**

(54) Batching device.

(57) A device for automatically batching packages of yarn, being advantageously but not solely employed in spinning processes, characterized by including in mutual cooperation and coordination a batching chamber (20) in which are arranged conveyor means (111) fed at one end with upright packages by package feeding and positioning means (12) there being provided at the other end of said conveyor means (111) suitable controlled barrier means (22) and package rotation means (27) capable of automatically engaging said packages and controlled batching means (21) for lubrificating said packages in rotation.

Description of the invention entitled:

"BATCHING DEVICE"

in the name of OFFICINE SAVIO Spa at Pordenone

-------

This invention concerns a batching device which can be employed advantageously to batch yarns wound into packages of a desired shape. Said operation makes it possible to provide said wound yarns with better running properties and therefore with a better pre-disposition for the processes following thereafter; it also enables losses of yarn in the form of dust and particles to be obviated.

It is known that batching is mostly carried out by spraying an appropriate oily liquid with suitable manual means onto the packages to be batched.

According to another method the batching is carried out by dipping the packages mechanically into the oily liquid kept in suitable containers.

The advantages of automatic devices as compared to manual systems are known, and it is known that said advantages become even more important if the functions or operations to be performed are repetitive, as in the specific case of batching the packages.

In fact, according to Search Report RS 63859 IT issued by the European Patent Office, patents US-A- 2,153,046, DE-C-726039 and CH-A-359424 disclose each a cop batching device.

Gilberto Petraz

These devices disclosed in these patents are basically concerned with spraying lubricant on yarn wound in the form of cops and the like as they normally travel, generally lying down, on a conveyor means.

US-A-2.153.046 attemps to improve the spray nozzles and the slates that carry the cops as well as to provide for causing a forced movement of the cops to improve their impregnation with the lubricant gathered on the conveyor means.

On the other hand DE-C-726039 attemps to find optimal positioning of the spray nozzles directed on the cops as they travel on the conveyor means.

The patent CH-A-359424 proposes instead a circular endless conveyor means.

These devices, while suitable for cops and bobbins which are long and narrow, are not suitable for large packages in the form of "cheeses" of similar which usually have a large diameter in comparison to the height since these large packages must absorb a large quantity of lubricant for a longer period of treatment. Furthermore these devices are wasteful of lubricant.

According to this invention the waste of batching fluid can be lessened advantageously by concentrating the livery of fluid only onto those part of the package which strictly need to be batched.

Furthermore, the part of the fluid delivered which stays in the surrounding atmosphere in the form of a suspension of particles in air is restricted within an appropriate chamber wherein the batching device is contained in whole or in part.

In substance, the device structured in this way prevents part of the fluid delivered from being dispersed and causing damage to personnel working in the surrounding atmosphere.

Such protection cannot be provided where spraying is done by hand or from a considerable distance or in a large quantity as in the known devices.

Moreover, manual systems and the known mechanical devices involve a considerable waste of oily liquid besides providing satisfactory batching only after long working times.

One purpose of this invention, therefore, is to embody a device which is advantageously automatic and which can perform effective batching of yarns wound on relatively large packages, whereby said device can concentrate the delivery of the batching liquid onto those zones alone which need to be batched.

A further purpose of this invention is that the transferring, positioning and batching operations should be carried out automatically and that the machine operator should possibly and only be needed to set or vary the working parameters at the start of or during the working cycle.

This invention, therefore, is displayed as a device to batch packages of yarn, whereby said device is employed advantageously in spinning processes and can operate automatically, being characterized by including in reciprocal cooperation and coordination:

- a batching chamber in which are arranged conveyor means fed at one end with upright packages by package feeding and positioning means there being provided at the other end of said conveyor means suitable controlled barrier means and package rotation means capable of automatically engaging said packages and controlled batching means for lubrificating said packages in rotation.

We now give hereinafter as a non-restrictive example the description of a preferential embodiment of the invention, at the same time referring to the attached tables, wherein:

Fig. 1 shows the whole batching device diagrammatically;

Fig. 2 shows the batching means diagrammatically

Fig. 3 shows a type of movable barrier for packages diagrammatically;

Fig. 4 shows the dosing means.

In the figures the same parts or parts performing the
same function bear the same reference numbers.

The packages 10 to be batched are transferred by means
of appropriate rollers or conveyors belts 11 to means 12 for
feeding positioning packages 10 to a batching chamber 20.

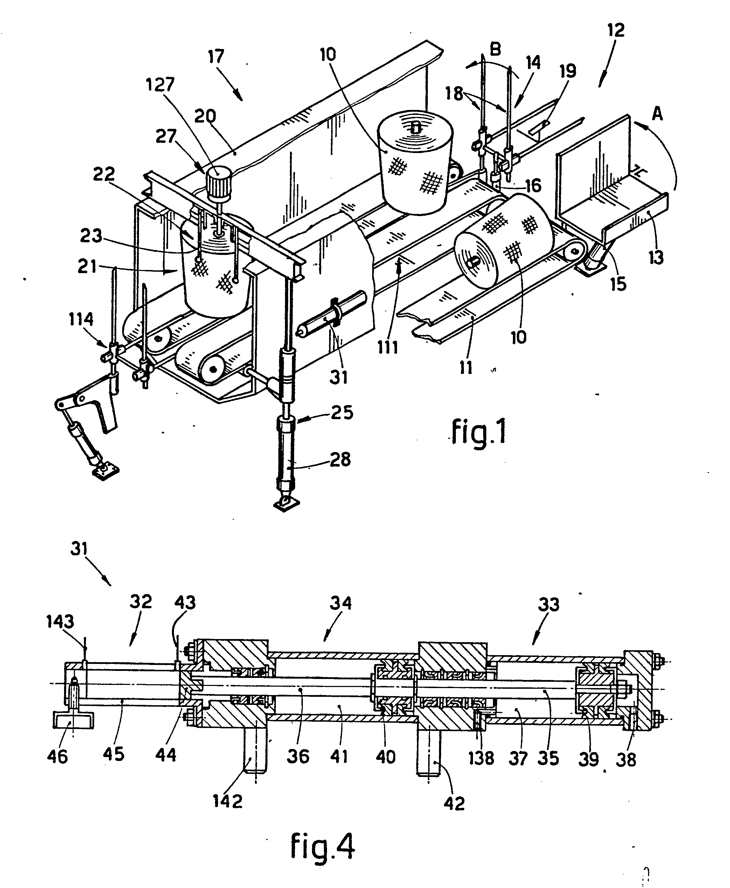

Said feed and positioning means 12 comprises, in the example
of Fig. 1, a shovel-like element 13 which is tiltable side-
way and a seating 14 which swings under the action of jack-
type actuating means 15 and 16 respectively.

In particular, the package 10 is transferred to and
positioned on the seating 14 by means of the conveyors belts
11 and shovel-like element 13, which resolves according
to A owing to the action of the jack 15.

Said feed and positioning means 12 can also include guide
means or automatic conveyor means able to replace said shovel-
like element 13 or to cooperate therewith. Said means have
to be compatible with the systems for forming packages 10
upstream from the batching device 17 of this invention.

The seating 14 consists of two pairs of element 18 shaped
fork-wise and connected so as to form an angled structure
which can be revolved according to B owing to the action
of the jack 16.

The seating 14 shown in Fig. 1 is not restrictive, and
in fact it can be envisaged that said structure and elements
18 can be shaped differently and hinged differently provided
that said positioning of the packages 10 is accomplished
advantageously.

According to the lay-out of Fig. 1, when the package 10
is placed on the seating 14, it acts on a micro-switch or sensor 19 which operates the jack 16. Said jack 16 makes the seating 14 revolve so as to position the package 10 with its vertical axis on the rollers or conveyor means 111 with said seating 14 is longitudinally aligned.

Said conveyor belts 111 transfer the package 10 into a batching chamber 20 containing the batching means 21.

The lower part of said chamber 20 is advantageously conformed like a vessel so as to collect excess batching fluid.

In the example of Fig. 1, while the package 10 is being transferred on the conveyor means 111, it encounters a movable barrier means 22 that comprises advantageously some sensor elements 23.

Said sensors 23 are activated by the package 10 when the latter reaches the batching position, and they govern the start of the batching phase.

When the package activates the sensors 23, the conveyor belts 111 are halted and jack-type actuating means 24 can be actuated.

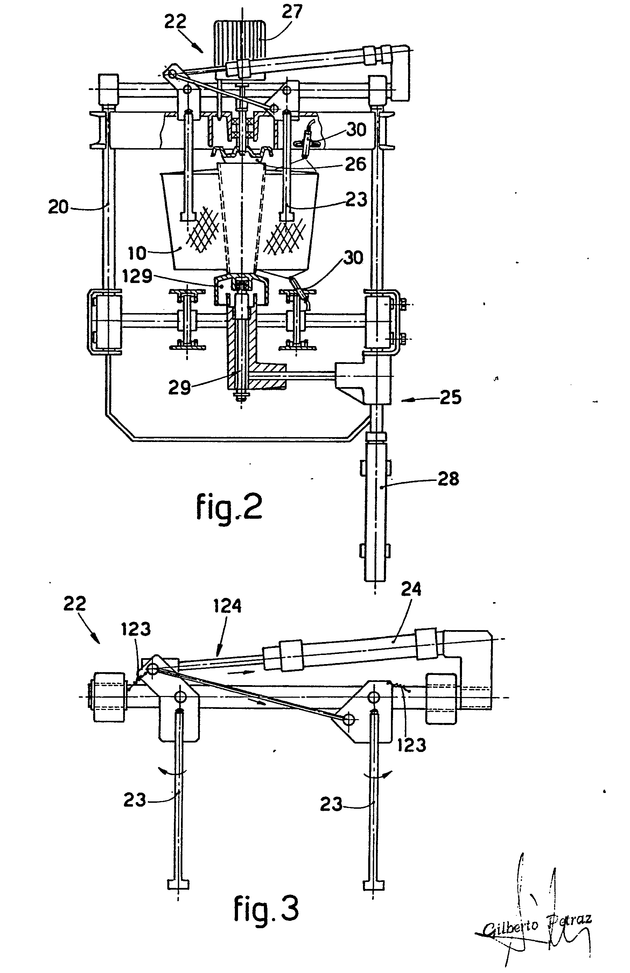

Said jack-type actuating means 24, in the example of Fig. 3, arrange for the movable barrier means 22 to be retracted by means of a suitable mechanical transmission system 124.

In the example shown the rods forming the movable barrier act also as sensors.

Said rods 23 also perform other tasks. In fact, they cushion with their independent retraction (they are pressed elastically by spring means 123) the inertia of the package and position said package accurately and on the same axis as the headstock and tailstock 26-29.

Actuator means 25 are also comprised which can lift the package 10 from the conveyor belts 111 so far as to press its upper and against a rotating headstock 26. The rotating headstock 26 cooperates with motor means 27, and said cooperation can be embodied with a coaxial connection, wheels, belts, transmission means or other means.

Said actuator means 25 include a jack 28 which imparts a vertical rising motion to a rotating tailstock 29, shown as an example in Fig. 2.

Said rotating tailstock 29 cooperates by means of its free-turning end 129 with the end part of the winding tube of the package 10 and raises and clamps it axially against the rotating headstock 26, this automatically engaging the package.

The package 10 is thus clamped between the rotating headstock and tailstock 26-29, whereby one of the foregoing 26-29 is motorized and the action of the headstock and tailstock 26-29 acts on the winding tube of the package 10.

According to a variant of the embodiment of the invention the jack 28 can be disposed on the same axis as the rotating tailstock 29 or in position different from that shown in Fig. 2.

Being thus clamped, the package 10 is made to revolve by the motor means 127 of rotation means 27 and is sprayed in a coordinated manner with batching fluid fed by suitable batching means 21 with a spraying nozzles 30.

Said batching means 21 with a spraying nozzle 30 are positioned at least above and below the package in such a way that the batching takes place evenly and affects the surface of the package 10 wholly or in part.

In particular, Fig. 2 shows two set of spraying nozzles 30 but other can be envisaged and positioned differently.

According to a variant of the embodiment of the invention it is possible to visualize that during batching the package 10 stays still and that the spraying nozzles 30 instead are made to rotate or are, at any rate, made movable, whereby the same relative movement can be obtained with each of said lay-outs.

The length of time taken for the spraying and the quantities of fluid sprayed are governed with suitable dosing means 31 located in a position readily accessible for the machine operative.

The quantity of fluid sprayed can also be governed with appropriate regulators included in said spraying means 30.

The dosing means 31 shown in Fig. 4 comprise a regulating device 32 and two pistons 33-34 connected together axially in series by means of respective stems 35-36.

In particular, the piston 33 performs the function of a drive means, whereas the piston 34 carries out the tack of a dosing pump able to suck the batching fluid through suitable ducts 42 or 142 and, at the same time, to discharge another pre-set quantity of batching fluid through the ducts 142-42.

In the example shown the piston 33 is activated for the batching operation by means of injection of air or oil into the chamber 37 through the ducts 38 and 138 so as to cause axial displacement of the buffer 39 and, therefore, of the stem 35 in one of the two directions of movement.

In this way the movement generated by the piston 33 is trasmitted to the stem 36 and, therefore, to the plunger 40 working in the chamber 41 of the piston 34.

Said chamber 41 communicates alternately, on one side, with the tank of batching fluid and, on the other side, with the nozzles of the spraying means 30 owing to the two ducts 42-142. The alternating motion of the plunger 40 enables the batching fluid to be sucked in and discharged alternately thereby through each duct 42-142, depending on whether said plunger 40 moves in one direction or the other. This is made possible by using controlled one-directional valves suitably oriented in each duct 42-142.

The stems 35-26 affect with their suitably conformed axial extension 44 the sensors 43-143 which are part of the regulating device 32.

Said sensors 43-143 can be stationary or can moved along an appropriate guide 45 so as to adjust said regulating system 32 and, therewith, the quantity of batching fluid delivered.

Fig. 4 shows the case where only one sensor 43 is movable or positionable on the guide 45 by activation of an appropriate slider 46.

Said sensors 43, which can be of a pneumatic, electric, elettromagnetic, optical or other type, monitor the presence of the axial extension 44 and produce control signals which, depending on the pre-set position of said sensors 43-143, govern the dosage of batching fluid sprayed.

Said working phases can also be operated or coordinated by a programmed timer of a known type; in this case it is possible to use the same pistons 33 and 34 once more or to use a different kind of pump for batching fluid.

When the batching cycle has ended, the regulating device 32 causes axial unclamping of the package 10 with the actuator means 24 and the re-positioning of said package on the conveyor means 111, which are re-activated.

In this way the package 10 can be moved to storage or to another destination, and the next package 10 can be batched.

Further treatments or operations may have to be performed on the batched packages 10.

For instance, it may be visualized that the packages 10 are stacked with suitable means which can be disposed waterfall-wise below the automatic batching device 17.

Positioning of the packages 10 on said means can be performed by locating at the end of the conveyor means 111 a revolving seating 114 like or the same as the seating 14.

Positioning means can also be visualized which use trans-

ferring arms, conveyors, plates, stationary or movable gui-- des, etc.

We have described here a preferential embodiment of this· invention together with some variants, but other variants are possible.

Thus the shapes and sizes can be varied and the packages. 10 can be sloped differently by the actuator means 25 during the batching phase; it is also possible to keep the package. 10 sloped differently when they are transferred, etc.

These and other variants are all possible for a technician in this field without leaving thereby the ambit of the idea. of the solution.

CLAIMS

1 - Device for automatically batching packages of yarns, being advantageously but not solely employed in spinning processes, characterized by including in mutual cooperation and coordination a batching chamber (20) in which are arranged conveyor means (111) fed at one end with upright packages by package feeding and positioning means (12) there being provided at the other end of said conveyor means (111) suitable controlled barrier means (22) and package rotation means (27) capable of automatically engaging said packages and controlled batching means (21) for lubrifi cating said packages in rotation.

2 - Device for automatically batching packages of yarn, as in claim 1, characterized by the fact that the means (27) for rotation of packages relative to said batching means (21) comprises headstock and tailstock means (26-29) acting on the support tube of said package (10), whereby at least a tailstock means (29) can move axially and there are drive means (27) to set in rotation said package (10).

3 - Device for automatically batching packages of yarn as in Claim 1 and 2 characterized by the fact that the means (12) for feeding and positioning packages onto conveyor means (111) comprises in mutual cooperation and coordination a shovel-like element (13) arranged to transfer a package lying lengthwise thereon, by tilting sideway, onto a swingable seating (14), aligned with said conveyor means (111), whose axis of rotation is normal to direction of movement of said conveyor means (111).

4 -- Device for automatically batching packages of yarn, as in Claim 1 and in one or another of the Claims thereafter, characterized by the fact that the movable barrier means (22) com prises a pair of swinging rod means (23) to align packages (10), whereby means to sense the presence of a positioned package

# 0053588

(10) on said conveyor means (111) are advantageously coupled thereto and the rod means (23) can be retracted temporarily. by suitable actuation means (24).

5 - Device for automatically batching packages of yarn, as in Claim 1 and in one of another of the Claims thereafter, characterized by the fact that the batching means (21) comprises in mutual cooperation and coordination:

- batching nozzles means (30), suitably arranged at least on top and below said package in rotating position and appropriately directed thereagainst;
- dosing means (31), which includes a drive means (33) and batching liquid pump means (34).

6 - Device for automatically batching packages of yarn, being advantageously but not solely employed in spinning processes, characterized by including in mutual cooperation and coordination a batching chamber (20) in which are arranged conveyor means (111) fed at one end with upright packages by package feeding and positioning means (12) there being provided at the other end of said conveyor means (111) suitable controlled barrier means (22) and means for rotating controlled batching means (21) for lubrificating said packages in a standstill position.

7 - Batching device for packages of yarn, as in Claim 1 and in one or another of the Claims thereafter, and as described and shown and for the purpose allowed.

0053588

1/2

fig.1

fig.4

Gilberto Petraz

fig.2

fig.3

0053588

European Patent
Office

**EUROPEAN SEARCH REPORT**

Application number

EP 81 83 0234

| | **DOCUMENTS CONSIDERED TO BE RELEVANT** | | | **CLASSIFICATION OF THE APPLICATION (Int. Cl. 3)** |
|---|---|---|---|---|
| Category | Citation of document with indication, where appropriate, of relevant passages | | Relevant to claim | |
| DA | DE - C - 726 039 (K. GOETTGES et al.) | | | B 65 H 71/00 D 06 B 23/04 |
| DA | US - A - 2 153 046 (H.V. LANG) | | | |
| DA | CH - A - 359 424 (FIBREXA S.A.) | | | |
| | ---- | | | |

**TECHNICAL FIELDS SEARCHED (Int.Cl. 3)**

B 65 H
D 01 H
D 06 H

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| The present search report has been drawn up for all claims | | |
|---|---|---|
| Place of search | Date of completion of the search | Examiner |
| The Hague | 26-02-1982 | DEPRUN |

EPO Form 1503.1 06.78